# EUROPEAN PATENT APPLICATION

(11) **EP 3 002 078 A1**
(43) Date of publication of application: **06.04.2016**
(21) Application number: 15185451.0
(22) Date of filing: 16.09.2015
(51) Int. Cl.: B23K 31/02

(54) **TRANSITION JOINT FOR WELDING DISSIMILAR MATERIALS**

(30) Priority: 30.09.2014 US 201414501111
(71) Applicant: Hamilton Sundstrand Corporation, Windsor Locks, CT 06096-1010 (US)
(72) Inventor: LOCKWOOD, William T., Windsor Locks, CT Connecticut 06096 (US); EDELEN, Michael C., Bolton, CT Connecticut 06043 (US); BOYSEN, Timothy R., Simsbury, CT Connecticut 06070 (US)
(74) Representative: Leckey, David Herbert

(57) **Abstract**

A fluid connection comprises a first component (26) having a fluid connection portion (38) and formed of a first material. A second component (24) has a second fluid connection and is formed of a second material, with the first and second materials being dissimilar. A transition joint (40) includes a first stub portion (42) formed of a third material, which is easy to connect to the first material, and the first stub portion (42) is fixed to the first connection (38). A second stub portion (48) is formed of a fourth material, which is connectable to the second material. The second stub portion (48) is fixed to the second connection, and the first and second stub portions (42, 48) are fixed together by a welding technique.

## Description

### BACKGROUND OF THE INVENTION

This application relates to a method for welding components formed of dissimilar materials.

In today's engineering fields, a number of highly engineered materials are utilized. Components must often be connected which are formed of distinct materials and materials which are not readily connectable by known methods, such as welding or brazing. As an example, components in refrigerant systems may be formed of aluminium, titanium, steels, such as corrosion resistant steel (CRES) and other materials. Some of these materials are not readily connectable. As such, mechanical joints have been utilized to connect these members. Mechanical joints have some undesirable characteristics.

While welding techniques, such as friction welding, are known for connecting dissimilar materials, the use of such techniques may not be practical under certain circumstances. As an example, refrigerant systems include large members, such as heat exchangers or compressors. It would be challenging to rotate such members as would be required to utilize friction welding.

### SUMMARY OF THE INVENTION

A fluid connection comprises a first component having a fluid connection portion and formed of a first material. A second component has a second fluid connection and is formed of a second material, with the first and second materials being dissimilar. A transition joint includes a first stub portion formed of a third material, which is easy to connect to the first material, and the first stub portion is fixed to the first connection. A second stub portion is formed of a fourth material, which is connectable to the second material. The second stub portion is fixed to the second connection, and the first and second stub portions are fixed together by a welding technique. A method is also disclosed.

These and other features may be best understood from the following drawings and specification.

### BRIEF DESCRIPTION OF THE DRAWINGS

Figure 1 schematically shows a refrigerant system.
Figure 2 shows a weld connection.
Figure 3A shows a first method step.
Figure 3B shows a subsequent method step.

### DETAILED DESCRIPTION

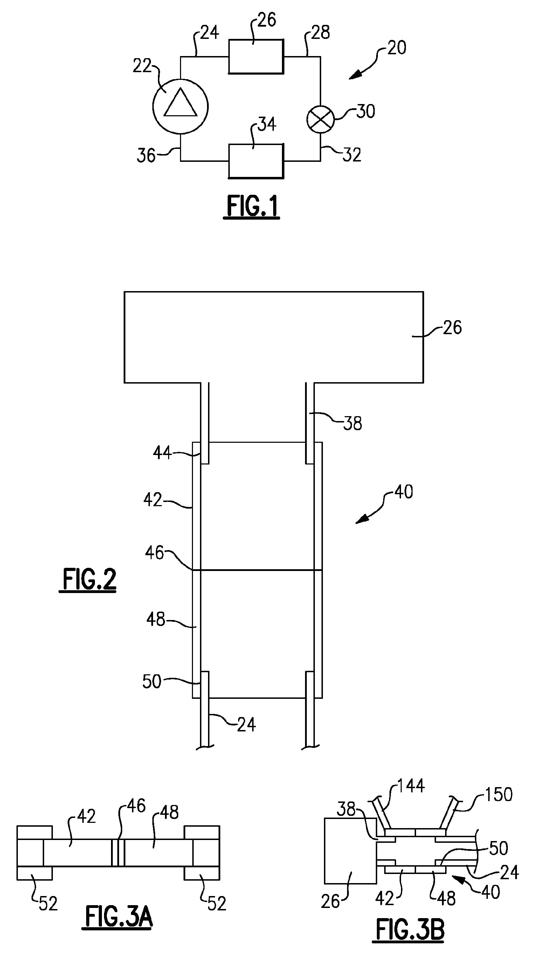

Figure 1 shows a refrigerant cycle 20. It should be understood that this is a very schematic view and a real world system would have any number of other connections and components. The cycle 20 may include a compressor 22 delivering compressed refrigerant into tubing 24. Tubing 24 is connected to a heat exchanger 26, which may function as a condenser. A tube 28 is connected to the heat exchanger 26 and communicates refrigerant to an expansion device 30. Tubing 32 communicates expanded refrigerant into a heat exchanger 34, which may function as an evaporator. Tubing 36 may communicate that refrigerant back to the compressor 22.

Even in this schematic simplified refrigerant system 20, there are eight connection points between tubing and components. These connection points may need to connect components formed of two distinct materials. As mentioned above, this raises challenges.

Figure 2 shows a transition joint 40, which connects a fluid connection 38 associated with the heat exchanger 26 to the tubing 24. In a disclosed embodiment, the fluid connection 38 is formed of a distinct material than the tubing 24. In embodiments, one may be formed of aluminum, titanium, steel, such as corrosion resistant steel or titanium. The other may be formed of another of these materials.

The transition joint 40 is formed of a first stub portion 42, which is formed of the same material as the fluid connection 38. Thus, a weld or brazed connection 44 is simple to complete in a reliable and efficient manner.

A second stub portion 48 is formed of the same material as the tubing 24. Thus, a weld or brazed connection 50 will also be simple to make. Since these connections are simple to make, they will be easy to complete, even considering the relatively large size of the components, as for example, the heat exchanger 26. A connection 46 connects the stub portions 42 and 48. This connection may be provided by known welding techniques, such as friction welding. Since only the stub shafts must be moved to achieve the friction weld, the challenges, as mentioned above, are eliminated.

This connection is resistant to a much wider temperature range and variety of fluid exposure than prior mechanical connections.

The method of forming the connection will be disclosed with regard to Figures 3A and 3B. As shown in Figure 3A, the stub portions 42 and 48 are initially separate. Welding tooling 52 is then utilized to weld the two together to have the joint 46. As known, if friction welding is utilized, the two stub portions 42 and 48 are moved relative to each other, such that a high degree of heat occurs at the joint 46 and the two merge into one. This then becomes transition joint 40. The friction welding may be inertia friction welding, rotary friction welding, or other known friction welding techniques. In addition, other welding techniques, such as explosive welding, magnetic pulse welding, ultrasonic welding, etc., may be used.

Then, as shown in Figure 3B, the connection 44 between the stub portion 42 and the connection 38 may be performed by welding or brazing tool 144. Similarly, a tool 150 may form the joint 50 between the stub portion 48 and the tubing 24.

As mentioned, while in embodiments, the stub portions are formed of the same material as the two components they are connecting. However, it is within the scope of this invention, that the two stub portions could be formed of third and fourth materials, different than the components to which they are connected, but wherein the materials are readily connectable together.

For purposes of the claims and interpreting this application, it is the portion of the component which is to be connected which must be formed of the first or second materials. As an example, the heat exchanger 26 will certainly be formed of more than one material. However, for purposes of interpreting the claims in this application, it is the material at the connection 38 which is to be evaluated.

Although an embodiment of this invention has been disclosed, a worker of ordinary skill in this art would recognize that certain modifications would come within the scope of this invention. For that reason, the following claims should be studied to determine the true scope and content of this invention.

## Claims

1. A fluid connection (38) comprising:
a first component (26) having a first fluid connection and formed of a first material;
a second component (24) having a second fluid connection and formed of a second material, with said first and second materials being dissimilar; and
a transition joint (40) including a first stub portion (42) formed of a third material, which is connectable to said first material, and said first stub portion (42) being fixed to said first fluid connection and a second stub portion (48) formed of a fourth material, which is connectable to said second material, and said second stub portion (42) fixed to said second fluid connection, and said first and second stub portions (42, 48) being fixed together by a welding technique.

2. The fluid connection as set forth in claim 1, wherein said third material is said first material and said fourth material is said second material.

3. The fluid connection as set forth in claim 1 or 2, wherein said first and second components (26, 24) are components in a refrigerant system.

4. The fluid connection as set forth in claim 3, wherein one of said first and second components is a heat exchanger (26) and the other is a tube (24).

5. The fluid connection as set forth in any preceding claim, wherein said first and second materials include at least one of aluminium, titanium, and steel.

6. The fluid connection as set forth in any preceding claim, wherein said connection between said first stub portion (42) and said first fluid connection is formed by one of a weld or brazed joint.

7. The fluid connection as set forth in claim 6, wherein said connection between said second stub portion (48) and said second fluid connection is provided by one of a weld or braze joint.

8. A method of forming a fluid connection (38) comprising the steps of:
identifying a first component (26) formed of a first material to be connected to a second component (24) formed of a second material;
forming a transition joint (40), including a first stub portion (42) formed of a third material, which is connectable to said first material, and forming a second stub portion (48) formed of a fourth material, which is connectable to said third material;
connecting said first and second stub portions (42, 48) to be fixed together; and
then connecting said first stub portion (42) to said first component (26) and connecting said second stub portion (48) to said second component (24).

9. The method as set forth in claim 8, wherein said third material is said first material and said fourth material is said second material.

10. The method as set forth in claim 8 or 9, wherein said components (24, 26) are components in a refrigerant system.

11. The method as set forth in claim 10, wherein one of said first and second components is a heat exchanger (26) and the other is a tube (24).

12. The method as set forth in any of claims 8 to 11, wherein said first and second materials include at least one of aluminium, titanium, and steel.

13. The method as set forth in any of claims 8 to 12, wherein a connection between said first stub portion (42) and said first component (26) is formed by one of a weld or brazed joint.

14. The method as set forth in claim 13, wherein a connection between said second stub portion (48) and said second component (24) is provided by one of a weld or braze joint.
